# FASCICULE DE BREVET EUROPEEN

(11) **EP 1 329 591 B1**
(45) Date de publication et mention de la délivrance du brevet: **30.03.2005**
(21) Numéro de dépôt: 03290060.7
(22) Date de dépôt: 10.01.2003
(51) Int. Cl.: F01D 5/08, F04D 27/02

(54) **Disque de compresseur axial de turbomachine à prélèvement d'air centripète**
Scheibe eines Axialverdichters einer Turbomachine mit zentripetaler Abblasvorrichtung
Axial compressor disc for a turbomachine with a centripetal air-bleed system

(30) Priorité: 17.01.2002 FR 0200523
(43) Date de publication de la demande: 23.07.2003
(73) Titulaire: SNECMA MOTEURS, 75015 Paris (FR)
(72) Inventeur: Avignon, Philippe, 31830 Plaisance du Tough (FR); Brunet, Antoine Robert Alain, 77550 Maissy-Cramayel (FR); Pasquis, Patrick Claude, 77950 Moisenay (FR)
(74) Mandataire: Le Bras, Hervé

(56) Documents cités:
- DE-A- 19 617 539
- US-A- 2 910 268
- US-A- 4 415 310
- US-A- 4 919 590

## Description

L'invention concerne un disque monobloc de compresseur axial de turbomachine comportant un système de prélèvement centripète d'air dans la veine du compresseur destiné au refroidissement d'une turbine, ledit système de prélèvement comportant des canaux ménagés en dehors de la section travaillante du disque et parallèlement à ladite section dans une surépaisseur faisant saillie hors de ladite section travaillante sur une face dudit disque, lesdits canaux débouchant dans la veine du compresseur à travers une bride destinée au raccordement dudit disque avec un disque adjacent.

Afin de ne pas affaiblir la résistance de la section travaillante du disque, FR 2 614 654 a proposé de percer des canaux dans des surépaisseurs faisant saillie hors de la section travaillante du disque, ces canaux traversant la bride de raccordement à un disque voisin du compresseur.

Ces canaux sont réalisés par électro-érosion, ce qui est une opération délicate et coûteuse. En outre, le contrôle des parois des canaux est difficile à faire.

L'état de la technique est également illustré par US 4 919 590 et DE 196 17 539. Dans ces deux documents, le système de refroidissement comporte des orifices ménagés dans la bride de raccordement du disque avec un disque adjacent et des nervures ou pales formées sur une face dudit disque. Le perçage de ces orifices est également laborieux.

Le but de l'invention est de proposer un disque de compresseur tel que mentionné en introduction dans lequel l'usinage des parois et le contrôle des parois usinées sont facilités, tout en conservant sensiblement les mêmes capacités de prélèvement en ce qui concerne la pression, le débit et les températures.

L'invention atteint son but par le fait que les canaux de prélèvement sont ouverts axialement sur toute leur étendue radiale, la bride de raccordement présentant en alternance des échancrures délimitant partiellement lesdits canaux et des portions pleines destinées au raccordement dudit disque avec un disque adjacent.

Avantageusement, chaque canal de prélèvement est délimité par deux ailettes sensiblement radiales qui s'étendent axialement sur une face dudit disque.

De préférence, les canaux de prélèvement sont disposés sur la face aval dudit disque et sont alimentés en air de prélèvement par des lunules formées par les échancrures et la portée circulaire amont de raccordement du disque suivant du compresseur.

L'invention concerne également un compresseur de turbomachine qui comporte un disque de compresseur conforme à celui décrit ci-dessus.

Avantageusement, le disque suivant de ce compresseur comporte dans sa région radialement intérieure un manchon annulaire d'étanchéité qui s'étend axialement vers les ailettes.

D'autres avantages et caractéristiques de l'invention ressortiront à la lecture de la description suivante faite à titre d'exemple et en référence aux dessins annexés dans lesquels :
la figure 1 est une demi-coupe axiale d'un tambour de compresseur selon l'art antérieur, cette demi-coupe contenant l'axe d'un canal de prélèvement ;
la figure 2 est une demi-coupe axiale d'un tambour de compresseur selon l'invention, cette demi-coupe contenant l'axe d'un canal de prélèvement ;
la figure 3 est une vue de la périphérie du disque prise selon la ligne III III de la figure 2 ; et
la figure 4 est une vue frontale du disque.

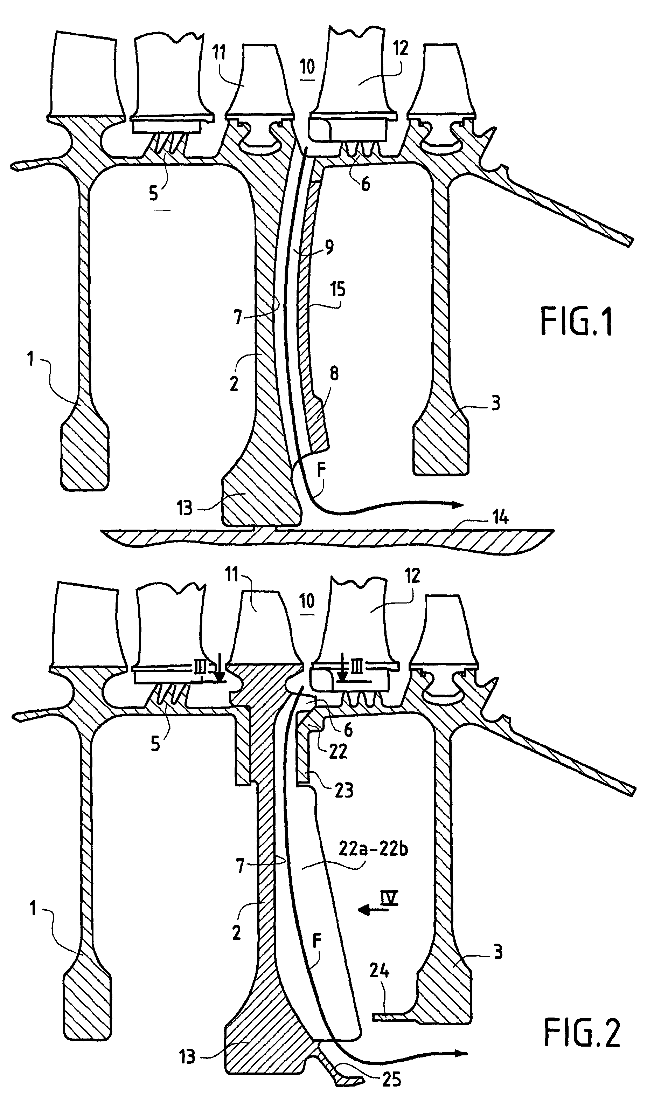

La figure 1 montre les disques 1, 2 et 3 de trois étages consécutifs d'un compresseur de turbomachine selon l'art antérieur. Les disques 1 à 3 sont reliés entre eux par des brides aval 5 et 6 soudées sur des portées circulaires du disque en aval.

Le disque 2 présente sur sa face aval 7 des surépaisseurs radiales 8 séparées par des évidements, et disposées en dehors de la section travaillante du disque 2. Par section travaillante, on entend la section de disque calculée en résistance des matériaux pour supporter les efforts en rotation dans les conditions de fonctionnement de la turbomachine.

Des canaux de prélèvement 9 sont réalisés dans les surépaisseurs 8. Ces canaux de prélèvement 9 débouchent au travers de la bride 6 dans la veine 10 de flux chaud entre les aubes 11 du disque 2 et les aubes 12 du stator. Le flux d'air F prélevé par un canal de prélèvement 9 circule vers la partie massive 13, radialement interne, du disque 2, puis est canalisé axialement vers les turbines à refroidir par l'arbre de turbine 14.

Les canaux de prélèvement 9 sont en fait des tubes réalisés par électro-érosion, et la référence 15 de la figure 1 désigne la portion de paroi de chaque tube, éloignée de la face aval 7 du disque 2.

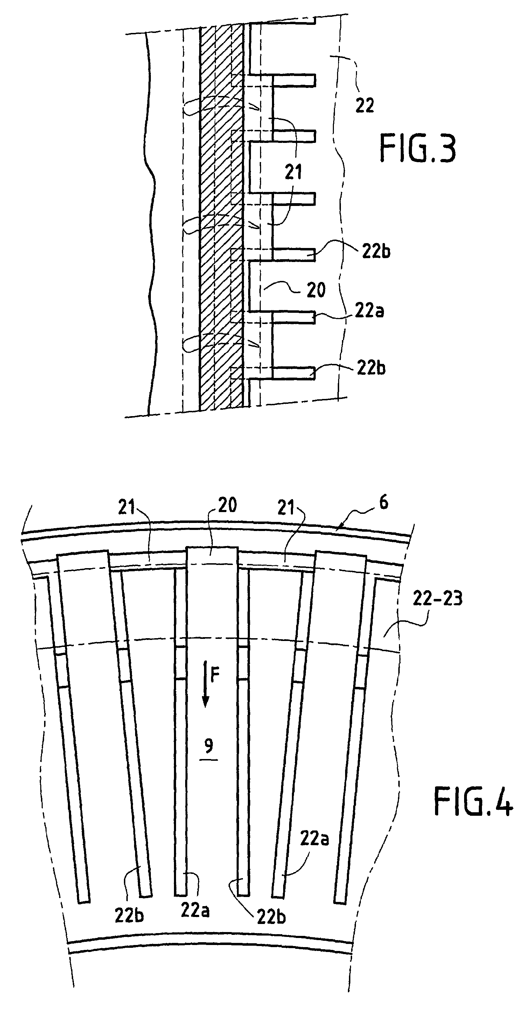

Les figures 2 à 4 montrent les mêmes disques 1, 2 et 3 d'un compresseur de turbine selon l'invention reliés entre eux par des brides aval 5,6 soudées sur des portées circulaires du disque en aval.

La bride aval 6 du disque 2 présente en alternance des échancrures 20 et des portions pleines 21. Lorsque la bride 6 est fixée par soudure à la portée circulaire 22 amont du disque 3, les échancrures 20 forment des lunules qui permettent un prélèvement d'air dans la veine 10 de flux chaud entre les aubes 11 du disque 2 et les aubes 12 du stator. Les flux d'air F prélevés sont guidés radialement le long de la face aval 7 du disque 2 par des couples d'ailettes 22a et 22b radiales qui s'étendent axialement vers le disque suivant 3 à partir de la face aval 7.

Ces ailettes 22a et 22b s'étendent axialement depuis la partie massive 13, radialement interne du disque 2 jusqu'aux portions pleines 21 de la bride 6, de part et d'autre d'une échancrure 20.

Les canaux de prélèvement 9 sont ainsi ouverts axialement du côté du disque suivant 3 sur toute leur étendue radiale. La portée circulaire 22 amont du disque 2 comporte notamment un retour 23 dirigé vers l'axe de rotation de la turbomachine et qui est relié par soudure aux portions radialement externes des ailettes 22a et 22b. Ainsi que cela se voit clairement sur la figure 2, l'étendue axiale des ailettes 22a et 22b croît lorsqu'on se rapproche de la partie massive 13 du disque 2. Le disque suivant 3 comporte dans sa région radialement interne un manchon annulaire 24 qui s'étend axialement vers le pied des ailettes 22a, 22b et qui assure l'étanchéité dans cette zone. A la sortie des canaux de prélèvement 9, les flux d'air F sont déviés axialement par un prolongement conique 25 de la partie massive 13.

## Revendications

1. Disque de compresseur axial de turbomachine comportant un système de prélèvement centripète d'air dans la veine du compresseur destiné au refroidissement d'une turbine, ledit système de prélèvement comportant des canaux (9) ménagés en dehors de la section travaillante du disque et parallèlement à ladite section dans une surépaisseur faisant saillie hors de ladite section travaillante sur une face (7) dudit disque, lesdits canaux débouchant dans la veine du compresseur à travers une bride (6) destinée au raccordement dudit disque avec un disque adjacent (3),
**caractérisé par le fait que** les canaux de prélèvement (9) sont ouverts axialement sur toute leur étendue radiale, ladite bride de raccordement (6) présentant en alternance des échancrures (20) délimitant partiellement lesdits canaux et des portions pleines (21) destinées au raccordement dudit disque avec un disque adjacent (3).

2. Disque selon la revendication 1, **caractérisé par le fait que** chaque canal de prélèvement (9) est délimité par deux ailettes (22a, 22b) sensiblement radiales qui s'étendent axialement sur une face (7) dudit disque.

3. Disque selon la revendication 2, **caractérisé par le fait que** les canaux de prélèvement (9) sont disposés sur la face aval dudit disque et sont alimentés en air de prélèvement par des lunules (20) formées par lesdites échancrures et la portée circulaire (22) amont de raccordement du disque suivant (3) du compresseur.

4. Compresseur de turbomachine, **caractérisé par le fait qu'**il comporte un disque (2) selon la revendication 3.

5. Compresseur selon la revendication 4, **caractérisé par le fait que** le disque suivant (3) comporte dans sa région radialement intérieure un manchon annulaire d'étanchéité (24) qui s'étend axialement vers lesdites ailettes (22a, 22b).

6. Compresseur selon l'une des revendications 4 ou 5, **caractérisé par le fait que** l'étendue axiale des ailettes (22a, 22b) croît lorsqu'on se rapproche de la partie massive (13) radialement interne du disque (2).

7. Compresseur selon la revendication 6, **caractérisé par le fait que** la partie massive (13) du disque 2) comporte un prolongement conique (25) pour dévier axialement le flux d'air.

## Patentansprüche

1. Scheibe eines Axialverdichters einer Turbomaschine mit zentripetaler Abblasvorrichtung von Luft in der Ader des Verdichters, die zum Kühlen einer Turbine bestimmt ist, wobei die Abblasvorrichtung Kanäle (9) aufweist, die außerhalb des Arbeitsabschnitts der Scheibe und parallel zu dem Abschnitt in einer Überdicke angeordnet sind, welche auf einer Seite (7) der Scheibe über den Arbeitsabschnitt hinausragt, wobei die Kanäle in die Ader des Verdichters über einen Flansch (6) münden, der zum Verbinden der Scheibe mit einer benachbarten Scheibe (3) bestimmt ist,
**dadurch gekennzeichnet, dass** die Abblaskanäle (9) axial über ihre ganze radiale Erstreckung geöffnet sind, wobei der Verbindungsflansch (6) abwechselnd Aussparungen (20), welche die Kanäle teilweise begrenzen, und vollwandige Anteile (21) aufweist, die zum Verbinden der Scheibe mit einer benachbarten Scheibe (3) bestimmt sind.

2. Scheibe nach Anspruch 1, **dadurch gekennzeichnet, dass** jeder Abblaskanal (9) durch zwei im Wesentlichen radiale Rippen (22a, 22b) begrenzt wird, die sich axial auf einer Seite (7) der Scheibe erstrecken.

3. Scheibe nach Anspruch 2, **dadurch gekennzeichnet, dass** die Abblaskanäle (9) auf der stromabwärts liegenden Seite der Scheibe angeordnet sind und mit Abblasluft durch Lunulas (20) versorgt werden, welche durch die Aussparungen und den stromaufwärts liegenden, zirkulären Bereich (22) der Verbindung der folgenden Scheibe (3) des Verdichters gebildet werden (22).

4. Verdichter einer Turbomaschine, **dadurch gekennzeichnet, dass** er eine Scheibe (2) nach Anspruch 3 aufweist.

5. Verdichter nach Anspruch 4, **dadurch gekennzeichnet, dass** die folgende Scheibe (3) in ihrem radial innen liegenden Bereich einen ringförmigen Dichtungsstutzen (24) aufweist, der sich axial in Richtung auf die Rippen (22a, 22b) erstreckt.

6. Verdichter nach einem der Ansprüche 4 oder 5, **dadurch gekennzeichnet, dass** die axiale Erstreckung der Rippen (22a, 22b) zunimmt, wenn man sich dem massiven, radial innen liegenden Tell (13) der Scheibe nähert.

7. Verdichter nach Anspruch 6, **dadurch gekennzeichnet, dass** der massive Teil (13) der Scheibe (2) eine konische Verlängerung (25) aufweist, um den Luftstrom axial abzulenken,

## Claims

1. An axial compressor disk for a turbomachine, the disk including a bleed system for centripetally bleeding air from the compressor stream in order to cool a turbine, the bleed system comprising channels (9) formed outside the working section of the disk and parallel to said section in an extra thickness that projects outside said working section on a face (7) of said disk, said channels being open to the compressor stream through a connection flange (6) for connecting said disk to an adjacent disk (3),
the disk being **characterized by** the fact that the bleed channels (9) are axially open over their entire radial extent, said connection flange (6) presenting alternating notches (20) defining said channels in part, and solid portions (21) for connecting said disk to an adjacent disk (3).

2. A disk according to claim 1, **characterized by** the fact that each bleed channel (9) is defined by two fins (22a, 22b) that are substantially radial, extending axially from a face (7) of said disk.

3. A disk according to claim 2, **characterized by** the fact that the bleed channels (9) are disposed on the downstream face of said disk and are fed with bleed air via crescents (20) formed by said notches and the upstream circular bearing surface (22) for connection purposes of the following disk (3) of the compressor.

4. A turbomachine compressor, **characterized by** the fact that it includes a disk (2) according to claim 3.

5. A compressor according to claim 4, **characterized by** the fact that the following disk (3) includes, in its radially inner region, an annular sealing sleeve (24) that extends axially towards said fins (22a, 22b).

6. A compressor according to claim 4 or claim 5, **characterized by** the fact that the axial extent of the fins (22a, 22b) increases on approaching the radially inner solid portion (13) of the disk (2).

7. A compressor according to claim 6, **characterized by** the fact that the solid portion (13) of the disk (2) includes a conical extension (25) for deflecting the air flow axially.
